# EUROPEAN PATENT APPLICATION

(11) **EP 2 202 336 A1**
(43) Date of publication of application: **30.06.2010**
(21) Application number: 08382075.3
(22) Date of filing: 12.12.2008
(51) Int. Cl.: D01D 5/00, D01F 1/02, B32B 5/22

(54) **Method for producing nanofibres of epoxy resin for composite laminates of aeronautical structures to improve their electromagnetic characteristics**

(71) Applicant: Eads Construcciones Aeronauticas S.A., 28022 Madrid (ES); Yflow Sistemas y Desarrollos, S. L., 29590 Malaga (ES)
(72) Inventor: Barrero Ripoll, Antonio, 41018 Sevilla (ES); Sequeiros Murciano, Felipe, 28005 Madrid (ES); González Loscertales, Ignacio, 29018 Málaga (ES); Luna Díaz, José Manuel, 28901 Getafe, Madrid (ES); Lallave Rivas, Manuel, 29590 Campanillas, Málaga (ES)
(74) Representative: Elzaburu Marquez, Alberto

(57) **Abstract**

Method for producing nanofibres of epoxy resin comprising the steps of: dissolving an epoxy resin formulation in a suitable solvent; and forcing the solution containing the epoxy resin formulation through at least one electrified capillary duct (6, 12), wherein a meniscus is formed at the exit of the capillary duct, being a thin charged nanojet (8) emitted from the vertex of the mentioned meniscus, the formulation of the epoxy resin being selected amongst one of the following: a liquid epoxy resin and a curing agent; a liquid epoxy resin, a curing agent and a binder; a solid epoxy resin; a solid epoxy resin and a curing agent; a solid epoxy resin and a binder; a solid epoxy resin, a curing agent and a binder; a liquid or solid epoxy resin partially cured with a latent curing agent; a liquid or solid epoxy resin partially cured with a latent curing agent and a binder.

## Description

### FIELD OF THE INVENTION

The invention refers to a method for producing epoxy nanofibres during the lay-up of structural elements of carbon fibre (CF) composite laminates, and more specifically epoxy nanofibres doped with carbon nanotubes, and to a laminate of composite material obtained by such a method.

### BACKGROUND

The intensive use of carbon fibre (CF) composite materials in aircraft structures has drastically weakened the protection of both airframe and on-board systems against the adverse electromagnetic environment that can be met during flight (lightning strike and high intensity electric fields). This is mainly due to the extremely low values of both the electrical and thermal conductivities of the CF laminates as compared to conventional metallic structures. In addition to the dielectric character of the epoxy matrix where carbon fibres are embedded, the multilayer arrangement of the laminates puts severe limits to the electrical contact between layers.

Because of their special molecular configuration both single walled carbon nanotubes (SWCNT) and multiple walled carbon nanotubes (MWCNT) can exhibit extremely high values of both electrical and thermal conductivities. Therefore, the dispersion of carbon nanotubes (CNT) into carbon fibre composite materials could be a promising alternative for the improvement of the electrical and thermal characteristics of these materials. Clearly, the achievement of a uniform and well-controlled distribution of CNTs into the composite is a key step for the improvement of its electrical characteristics. Furthermore, the concentration level of the CNTs must also be sufficiently high to reach the percolation limit. In the case of other types of conducting nanoparticles different from the popular carbon nanotubes, the securing of a good degree of dispersion is also an indispensable condition to improve the electrical characteristics of the composite. Polymer matrices with a highly uniform distribution of CNTs have been obtained by making nanofibers from a polymer containing CNTs previously dispersed into it. [New nanocomposite materials made of an insulating matrix and conductive fillers, Polymer Composites, 21, 2, (2000). Electrical and thermal conductivity of polymers filled with metal powders. European Polymer Journal 38, 1887-1897 (2006). Electrical properties of epoxylsilver nanocomposites, Journal of Applied Physics 99, 024308, (2006). Hoping conductivity in polymer matrix-metal particle composites. Composites: Part A 37, 1545-1553, (2006)].

Electro-spinning is a very suitable technique to manufacture doped polymer nanofibers. Relevant aspects on the technique can be found in several patents (EP 1 364 718 B1 *Device and method for producing stationary multicomponent liquid capillary streams and micrometric and nanometric sized capsules*; PCT-WO-2005/089042 A2 *Method for the generation of composite nanotubes and nanofibres from coaxial jets*) and papers (Micro/Nano encapsulation via electrified coaxial jets, Science 295, 1695-1698, 2002; Electrospinning process and applications of slectrospun fibers, J. Electrostat., 35, 151-160, 1995; Micro and nanoparticles via capillary flows, Ann. Rev. Fluid Mech. 39, 89-106, 2007) among many other publications. Core-shell nanofibres or hollow nanofibres have been obtained from electrified coaxial jets of two immiscible liquid *[*Electrically forced coaxial nanojets for one-step hollow nanofiber design, J. American Chem. Soc. 126, 5376 (2004); Euro-PCT 05742395.6].

If the polymer forming the fibres were the epoxy resin generally employed in the manufacturing of the carbon fibre (CF) composite laminates, no incompatibility would exist between the fibres and the rest of the components of the laminate, and the maintenance of the aero-structures would be largely improved. Moreover, in that case, the fabrication process of fibres could be integrated within the manufacturing lines of the laminates.

Although the fabrication of nanofibres membranes of epoxy resin made by electrospinning has been reported [see for example Materials Science and Engineering A 435-436, 309-317, (2006)], there are no references of the synthesis, via electro-spinning, of doped nanofibres of epoxy resin obtained. This is probably due to the fact that the cured process of the epoxy resin at room temperature is too fast for a straightforward industrial application. Therefore, the synthesis of fibres of epoxy resin via electrospinning requires a substantial increasing the reaction time.

The present invention is oriented to the solution of the above-mentioned drawbacks.

### SUMMARY OF THE INVENTION

In a first aspect, the invention refers to the fabrication by electro-spinning of micro-nanofibres of epoxy resin, and more specifically nanofibers previously doped with either SWCNT or MWCNT; the concentration of carbon nanotubes must be sufficiently high to reach the percolation limit. The substitution of the carbon nanotubes for other conducting nanoparticles fillers is also considered under the scope of the present invention.

Once doped micro-nanofibres have been manufactured, they are applied onto each CF ply by an automatic method, which consists in a two axes electrically moving device in which the fibre emitters are assembled. Both the speed of the moving device and the duration of the fibre application process allow controlling the doped nanofibre distribution over the whole CF ply surface and the thickness of the nanofibre layer. The electromagnetic characteristics of these aero-structures are largely enhanced; in particular, electromagnetic screening, static charge drainage, and protection against the lightning impact are highly improved.

This invention refers to a method of fabrication of nanofibres of epoxy resin, either simple or hollow ones, containing carbon nanotubes as well as their application, by a controlled and automated process, on the surface of one or more layers of the aero-structures.

Nanofibres are obtained by the electro-hydrodynamic technique (electro-spinning) in which a solution of the epoxy resin containing CNT's at a certain concentration is slowly injected throughout an electrified needle. Then, an extremely thin electrified jet issues from the meniscus formed at the needle exit. The evaporation of the solvent taking place during the downstream evolution of the jet shots the solidification of the epoxy resin and doped nanofibers with diameters in the sub-micro-metre or low micrometre range are obtained. The concentration of CNTs must be higher than a certain threshold value to reach the percolation limit. Let us emphasize that, in other embodiments, carbon nanotubes can be replaced by other conducting nanoparticle fillers. It should be pointed out that if an electrified coaxial jet is formed, in such a way that the epoxy resin solution surrounds a non-reactant liquid flowing coaxially with it, hollow doped nanofibres, instead of filled ones, would be obtained (see for example: Electrically forced coaxial nanojets for one-step hollow nanofiber design, JACS 126, 5376-5377, 2004; Euro-PCT 02711878.5).

Since the nanofibres are highly charged, they can be directly projected on the laminate taking advantage of the electric field existing between the injectors through which the epoxy resin is injected and the laminate on which nanofibres are projected. The application process can be automated by controlling the relative motion of the injectors with respect to the laminate.

In a second aspect, the invention refers to a laminate of composite material obtained by such a method. Such laminate, suitable for aerostructures, comprises a plurality of fibre plies, wherein at least one of the plies is coated with a layer of nanofibers, said nanofibers being doped with nanoparticles of a high electrical conductivity and produced by said method.

Other characteristics and advantages of the present invention follow from the detailed description from the following section and from the figures presented.

### DESCRIPTION OF THE FIGURES

Figure 1 shows an example of the multilayered laminate of composite material for aeronautical structures according to the invention.
Figures 2a, 2b, 2c y 2d schematically show the different steps of the fabrication procedure of the laminate of composite material for aeronautical structures accordingly to the invention.
Figures 3a and 3b show a compound Taylor cone with a meniscus surrounding another one and the downstream jet evolution of the coaxial jet, in the method according to the invention

### DETAILED DESCRIPTION OF PREFERRED EMBODIMENTS

As mentioned before, the invention consists in the generation of a jet, by resorting to electro hydrodynamic forces, of a solution of epoxy resin with CNTs dispersed within it. Then, doped nanofibres formed from the jet solidification are sprayed over a carbon fibre ply. The epoxy resin solution is injected at appropriate flow rates through an electrified needle. The needle is connected to the plus pole of a several kilovolt DC supply source and the ground electrode is attached to the carbon fibre ply; therefore, charged nanofibres driven by the electric field are collected at the surface of the ply. The result of the electro-spinning process is a deposit of epoxy resin nanofibres doped with CNTs covering a given surface of carbon fibre ply. To increase the throughput, one can use an injector with N needles (where N is a natural number) and the application apparatus can consist of several injectors.

The relative displacement of the injectors with respect to the ply allows the coating of the whole surface of interest. It is possible to control the fibre distribution and the coating thickness by adjusting both the displacement of the injectors at any requested speed and the operational time.

The process can be repeated as many times as desired between different CF layers. Finally the laminate is cured by any qualified procedure (example autoclave curing). The result is a CF composite structure with improved electrical and thermal characteristics.

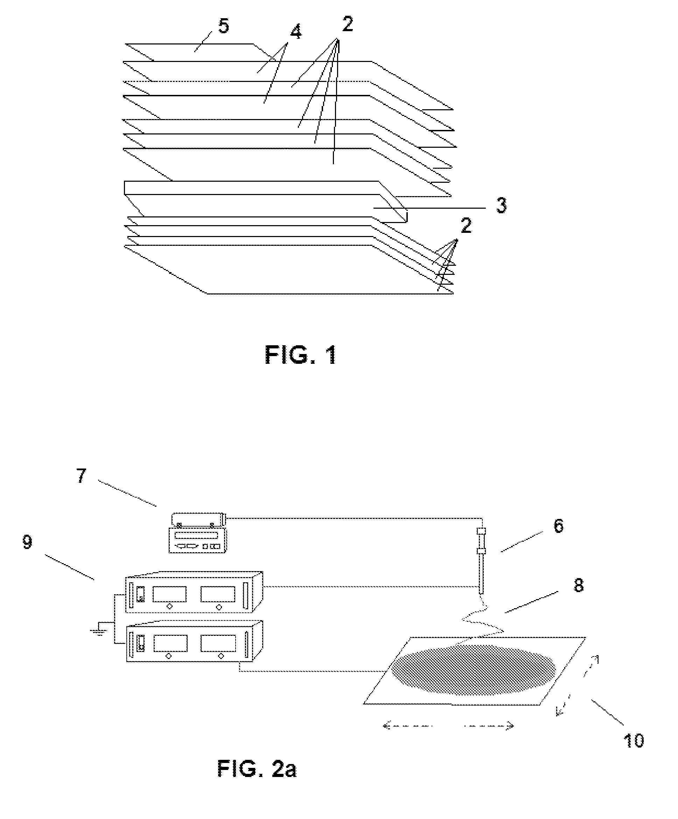

The composition of laminate of composite material for aeronautical structures according to the present invention is given in Figure 1; several plies of carbon fibre 2 containing a honeycomb structured material plate 3 with a 10 mm thickness in between. Coatings of electrospun fibres of epoxy resin doped with CNTs 4 are applied on each of the surfaces of carbon fibre plies 2 and on plate 4. To complete the laminate of the invention, there are another carbon fibre ply 2 properly coated with a layer of electro-spun epoxy resin doped with CNTs 4 plus a metallic ply 5. The metallic ply 5 may consist of a metallic mesh, comprising metal wires, or may be in form of woven.

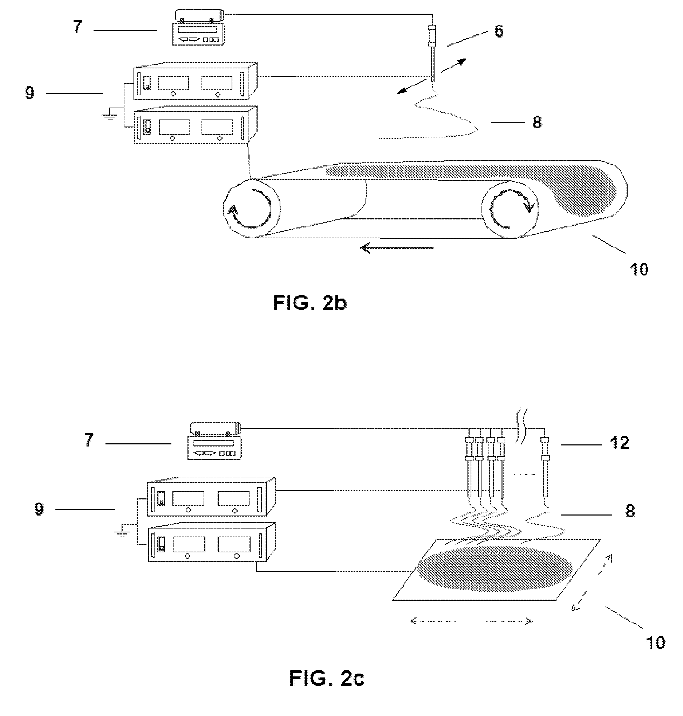

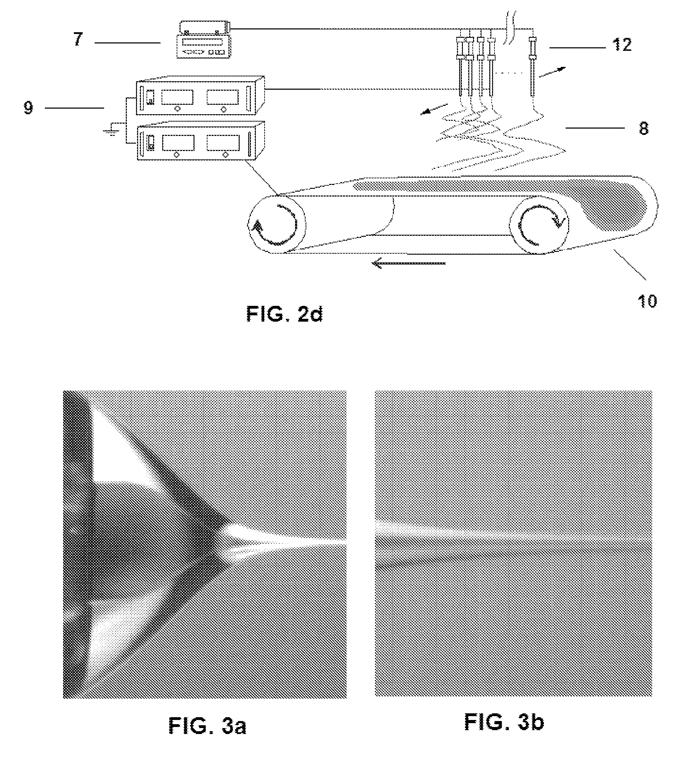

Epoxy resin nanofibres 8 as those required to manufacture the laminate (see Figure 2) are obtained by generating a single jet of a solution of resin epoxy by electro-hydro-dynamics forces; the procedure is referred in the literature as electrospinning. Basically, the set up consists of an injector with one or more electrified needles. Liquid precursor of the nanofibres is forced through the needle by a pumping system 7. The formation of the electrified jet requires that the electrical conductivity of the precursor is larger than a certain threshold value (typically larger than 10⁻⁸-10⁻⁷ S/m). The electrical forces provided by a DC high voltage supply give rise to a micro-jet coming out from the meniscus formed at the needle exit. During the evolution of the jet towards the fibre collector (ground electrode), it undergoes electro-hydro-dynamic instabilities that cause its stretching; this effect together to that of solvent evaporation allows the reduction of the fibre diameter up to nanometric levels. The injector, 6 or 12, may have only one needle (Figures 2a and 2b) or several ones (Figures 2c and 2d). The relative displacement of the injectors with respect to the collector allows the coating of the whole surface of interest. This can be achieved by a displacement or a motion of the collector, or from a motion of the injection system, or the from the combination of a motion of the collector and a motion of the injection system. In a preferred embodiment, the collector is actuated by a rotating system which produces a linear movement of the laminate perpendicular to the linear-alternative motion of the injection system. The collector may be moving either alternately (Figures 2a and 2c) or cyclically (Figures 2b and 2d). Alternatively, the collector may be at rest and the injectors moving relatively to it.

The electro-spinning technique directly allows the application of the nanofibres onto the surface of interest. To this purpose, either single injector 6 or multiple ones 12 are connected to an electric potential (typically within the range100V-1000 kV) supplied by a high voltage source 9. Ground electrode is connected to the tool supporting the laminate and plies. Alternatively, it can be directly connected to one of the carbon fibre plies. Since the epoxy resin nanofibres are charged, the existing electric field drives them towards the collector surface (the one connected to the ground)10. The relative motion between the injectors 6 or 12 and the laminate allow the coating of the surface of interest with nanofibres. Moreover, it is possible to control the characteristics of the coating (density and thickness) by adjusting the speed of the relative motion and the application time. The procedure can be repeated between so many layers of composite material as needed. After this procedure is already completed, the resulting material is cured in autoclave. The resulting structure of composite material has electrical and thermal characteristics largely improved.

For some other applications hollow nanofibers can be preferred. Core-shell nanofibres or hollow nanofibres have been obtained from electrified coaxial jets of two immiscible liquid [Electrically forced coaxial nanojets for one-step hollow nanofiber design, J. American Chem. Soc. 126, 5376 (2004); Euro-PCT 05742395.6]. It should be remarked that coaxial nanofibres would be obtained if both liquids (the outer and the inner ones) solidify before the jet break up while if the inner fluid remains liquid during the process, hollow nanofibres would be obtained.

To produce hollow nanofibres of epoxy resin doped with CNTs from electrified coaxial jets according to the present invention, the solution containing both the resin epoxy and the CNTs is forced through the gap existing between two needles (or capillary tubes) located concentrically, one of the needles or both are properly electrified. Then, an electrified meniscus is formed at the needle exit from whose vertex a thin jet is issued. A second liquid, immiscible or poorly immiscible with the first one, is forced through the inner needle in such a way that another meniscus is formed inside the previous one (see Figure 3a). The motion of the outer liquid driven by electrical stresses deforms the inner meniscus and extracts a second jet of the second liquid which flows coaxially with the outer liquid to form eventually an electrified compound jet with the two liquids flowing coaxially (see Figure 3b). The inner core of the jet formed by the second liquid is surrounded by an outer layer of the solution containing the resin doped with carbon nanotubes. The process gives rise to electrified coaxial jets with an outer diameter ranging between 300 microns and 5 nanometers. Finally, solidification of the resin polymer of the jet allows for obtaining hollow nanofibres of epoxy resin doped with nanotubes once the second liquid leaves out.

### Formulation Of The Epoxy Resin

When the molecular weight of the epoxy resin is relatively low, as in this case, the resin cannot be electro-spun without an adequate modification of the its structure; in particular, the molecular weight of the epoxy resin must be increased until it becomes solid or semi-solid at the temperature of the process (typically room temperature). One possibility is to take the resin up to an intermediate state between its original molecular structure and its solid polymer state, called *B-stage.* This requires adding high temperature curing agents to the resin solution. Clearly, polymerization will start when the temperature of the resin solution becomes higher than the activation temperature of the curing agents. The fraction of the time in which the temperature of the resin is above of the activation temperature controls the degree of polymerization reached in the resin. If the temperature decreases below the activation one, a partially cured resin in a semi-solid state is obtained; the curing degree depends on the total time the temperature of the resin solution has been above the activation temperature of the curing agents.

Another alternative, which does not make use of curing agents, consists in increasing the molecular weight of the resin up to crystallization. This process, known in the literature as *advancement* or *upgrading,* has been discussed in patents US4440914 and US4105634. Basically, it consists in the increasing of the size of the molecular chain of the resin by adding the basic monomer as much as required. For the specific epoxy resin discussed here, DiGlycidyl Ether of Bisphenol A (DGEBA), we dissolve the monomer -bisphenol A- together with a catalyst into the epoxy resin (DGEBA) at a temperature ranging from 100 to 180 °C. In this way, we obtain a crystallized resin with an increased molecular weight, which will depend on the used concentration ratio bisphenol A/DGEBA. Then the obtained crystallized resin and a curing agent can be dissolved in a proper solvent to form a curable solution.

Both methods lead to solutions, which might require the addition of a binder favouring the formation of fibres. Commonly the binder is a high molecular weight linear polymer soluble in the solvent employed to dissolve the resin. The required amount of binder depends on the molecular weight of the modified resin and on its concentration in the solvent; the total mass of the binder being typically very small compared to that of the resin.

The two methods described above are time independent since no chemical reaction takes place during the electrospinning process. This is an important advantage for the industrial implementation of the methods. Note that if the curing agent in the solution were active at the temperature of the electrospinning process, the rheology of the original resin would evolve in time, possibly making the electrospinning process only feasible within a time interval relatively small [Materials Science and Engineering A 435-436 (2006) 309-317]. Therefore, the industrial implementation of this time-dependent method would be difficult, especially when the solutions have to be doped with carbon nanotubes or other nanoparticle fillers before electrospinning.
Carbon nanotubes (or other conducting nano-particle fillers) must be previously dispersed into both the resin (if it is liquid) and the solvent before electrospinning. In any case, the CNTs concentration must be appropriate to reach the percolation limit. Clusters of CNTs must be avoided to ensure a homogenous mixture.

The application procedure of the nanofibers on the laminate of the composite material is one of the objects of the invention, whereas nanofibres are doped with either CNTs or other conducting nanoparticle fillers and they have been obtained by the method described above; whereas the ground electrode of the high power supply is connected to either the piling up tool or to one of the plies (if they are conducting, i.e. carbon nanofibres); whereas the multi-injectors are connected to an electrical potential that can vary between 100 V and 1000KV; whereas the multi-injectors throw the doped epoxy nanofibers onto the surface of interest; whereas the relative motion between injectors and the surface of interest is driven by stepper motors; whereas both the thickness and the concentration of the coating are controlled by the injector displacement motion and the application time; whereas the electrical conductivity of the composite material aero-structures obtained with this procedure is largely enhanced with respect to that of a convectional carbon fibre laminate; whereas the given electromagnetic protection is determined by the thickness and uniformity of the coating.

It is also an object of the present invention, the mixed use of coatings of doped nanofibres with other conventional methods of metallization, such as metallic mesh to improve the electromagnetic protection of the laminate of an aero-structure of composite material; the above combination makes possible to use mesh with smaller thickness in the zones of the airplane of larger exposure to the lightning impact (it should be able to dissipate currents up to 500 kA and energies 3,5. 10⁶.A².seg).

All the modifications described in the following claims might be also used in the embodiments above described.

## Claims

1. Method for producing nanofibres of epoxy resin comprising the steps of:
a) dissolving an epoxy resin formulation in a suitable solvent; and
b) forcing the solution containing the epoxy resin formulation through at least one electrified capillary duct (6, 12), wherein a meniscus is formed at the exit of the capillary duct, being a thin charged nanojet (8) emitted from the vertex of the mentioned meniscus.

2. The method of claim 1, wherein the formulation of the epoxy resin is selected amongst one of the following:
a) a liquid epoxy resin and a curing agent;
b) a liquid epoxy resin, a curing agent and a binder;
c) a solid epoxy resin;
d) a solid epoxy resin and a curing agent;
e) a solid epoxy resin and a binder;
f) a solid epoxy resin, a curing agent and a binder;
g) a liquid or solid epoxy resin partially cured with a latent curing agent;
h) a liquid or solid epoxy resin partially cured with a latent curing agent and a binder.

3. A method according to any of the preceding claims, wherein conducting nanoparticles have been dispersed in the solution containing the epoxy resin formulation.

4. A method according to claim 3, wherein carbon nanotubes are used as conducting nanoparticles.

5. A method according to any of the claims 3 or 4, wherein concentration of the conducting nanoparticles in the solvent is high enough to reach the percolation threshold of the solution obtained, once the solvent has substantially evaporated.

6. A method according to any of the preceding claims, wherein the at least one electrified capillary duct (6, 12) is part of an injection system, the liquid precursor of the nanofibres being forced by a pumping system (7), the electrified capillary duct being electrified by a high voltage supply (9) such that the electrical forces due to the high voltage supply (9) drive the charged nanojet towards a grounded collector (10), therefore developing lateral hydrodynamic instabilities, which together with solvent evaporation lead to the enormous thinning of the jet, needed to reach nanometric values of its diameter.

7. A method according to any of the preceding claims, wherein the nanojet has a diameter that ranges between 300 microns (300 x 10⁻⁶ m) and 5 nanometres (5 x 10⁻⁹ m)_{.}

8. Method for producing nanofibres of epoxy resin according to any of the preceding claims, wherein the at least one capillary duct comprises at least two substantially concentric capillary subducts, an inner and an outer subduct, the epoxy resin formulation being forced through the gap between the two substantially concentric subducts, being a second liquid forced through the inner subduct, such that the coaxial jet formed by an inner jet of the second fluid flowing coaxially with the external epoxy resin formulation, develops at the exit of the two capillary subducts to produce hollow nanofibres.

9. Method for producing nanofibres according to any of claims 6-8, wherein there is a relative motion of the collector with respect to the injection system, resulting from a motion of the collector, or from a motion of the injection system, or from the combination of a motion of the collector and a motion of the injection system.

10. Method for producing nanofibres according to any of claims 6-8, wherein the motion of the injection system is linear and alternative, and the motion of the collector is in a substantially perpendicular direction to the motion of the injection system.

11. Method for producing nanofibres according any of claims 6-10 wherein the injection system is formed by more than one multi-injectors, each multi-injector having at least one electrified capillary duct.

12. Composite laminate for aerostructures having a plurality of fibre plies (2) **characterized in that**
- at least one of the plies (2) is coated with a layer (4) of nanofibers;
- said nanofibers are doped with nanoparticles of a high electrical conductivity; and
- the nanofibers are produced by the method of any of claims 1 to 11.

13. A laminate according to claim 12, wherein a core material (3) is located between any of the fibre plies (2).

14. A laminate according to claims 12 or 13, wherein the core material (3) is coated by nanofibers produced by the method of any of claims 1 to 11.

15. A laminate according to any of the preceding claims, wherein a metallic ply (5) is located at any place in the composite laminate to improve its electromagnetic properties.
